# EUROPEAN PATENT APPLICATION

(11) **EP 4 636 103 A1**
(43) Date of publication of application: **22.10.2025**
(21) Application number: 23903992.8
(22) Date of filing: 13.12.2023
(51) Int. Cl.: C22B 26/12, C22B 3/08, C22B 3/22

(54) **WASHING SOLUTION FOR LITHIUM RECOVERY AND METHOD FOR RECOVERING LITHIUM FROM LITHIUM-CONTAINING WASTE LIQUID**

(30) Priority: 16.12.2022 KR 20220177585
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: Kim, Hyun Soo, Pohang-si, Gyeongsangbuk-do 37667 (KR); Choi, Sanghyeon, Pohang-si, Gyeongsangbuk-do 37767 (KR); Jeung, Kee Uek, Pohang-si, Gyeongsangbuk-do 37656 (KR); Kwon, Young Su, Pohang-si, Gyeongsangbuk-do 37670 (KR)
(74) Representative: Pfenning, Meinig & Partner mbB
(86) International application number: PCT/KR2023/020534
(87) International publication number: WO 2024/128791

(57) **Abstract**

The present invention relates to a method for recovering lithium from a lithium-containing waste solution, which includes the steps of filtering a positive electrode material washing solution to separate metals in solid form contained in an alkaline waste solution, introducing sulfuric acid into the filtered positive electrode material washing solution to acidify it and convert lithium carbonate or lithium hydroxide into lithium sulfate, concentrating the washing solution converted to lithium sulfate to obtain a high-concentration lithium sulfate solution, and incorporating the high-concentration lithium sulfate solution into a leachate obtained from ore.

## Description

### FIELD OF THE INVENTION

The present disclosure relates to a method for recovering lithium, and more particularly, to a washing solution for lithium recovery and a method for recovering lithium from a lithium-containing waste solution.

### DESCRIPTION OF THE RELATED ART

The positive electrode active material of lithium secondary batteries includes materials such as lithium, nickel, cobalt, and manganese. To improve the performance of electric vehicles, there is a demand for increased battery capacity and lifespan, leading to a rising demand for high-energy-density High-Ni batteries. When the content of Ni is high, Ni tends to remain in a divalent state, leading to the production of lithium by-products such as LiOH and Li₂CO₃ on the surface. These lithium by-products must be sufficiently removed through a washing process, as their significant presence on the surface can degrade the performance of lithium batteries.

However, the washing solution generated by the washing process contains lithium along with sulfates. If lithium in the washing solution can be recovered, it can be utilized as a raw material for the production of lithium hydroxide and lithium carbonate.

Technologies related to the recovery of lithium from lithium-containing solutions have mainly focused on solutions leached from waste batteries using acid, with little attention given to washing solutions generated during the manufacturing process of positive electrode materials. Some technologies employ a chemical precipitation method to remove impurities such as sulfates from lithium-containing waste solutions and then concentrate the solution to precipitate lithium carbonate.

However, recovering lithium by precipitating lithium carbonate from the washing solution poses challenges as the precipitate adheres to the equipment, hindering stable operation and potentially causing lithium loss during the removal of the adhered precipitate. Additionally, equipment such as sedimentation tanks or filters is required to separate the solid precipitate, leading to increased equipment investment costs.

Moreover, since the precipitate contains a large amount of impurities, a purification process is required to remove them, and the precipitate must be redissolved before being fed into the purification process. From the perspective of lithium, it is dissolved in the washing solution, becomes solid upon precipitation, and then needs to be redissolved, complicating the process and making it economically inefficient.

Consequently, there is increasing interest in technologies that directly introduce waste solutions into the purification process. However, the low concentration of lithium present in the waste solution reduces process efficiency, leading to decreased productivity. To efficiently recover lithium from the waste solution, it is necessary to concentrate the waste solution as much as possible while preventing lithium from precipitating.

### TECHNICAL PROBLEM

The technical problem to be solved by the present invention is to provide a concentrated washing solution that maximizes the concentration of lithium during evaporation concentration from a lithium-containing washing solution and does not produce precipitates.

Another technical problem to be solved by the present invention is to provide a method for recovering lithium from a lithium-containing waste solution that maximizes the concentration of lithium during evaporation concentration from a lithium-containing washing solution and does not produce precipitates.

### TECHNICAL SOLUTION

According to one embodiment of the present invention, a washing solution for lithium recovery is a washing solution prepared from a lithium-containing waste solution, which can satisfy the following formula 1.

<FORMULA 1> [Li]/([Na]+[K]+[S]) ≤ 0.50

(wherein, in formula 1, [Li], [Na], [K], and [S] respectively represent the content [g/L] of Li, Na, K, and S in the washing solution).

According to another embodiment of the present invention, a method for recovering lithium from a lithium-containing waste solution may include:
filtering a positive electrode material washing solution to separate metals in solid form contained in an alkaline waste solution; introducing sulfuric acid into the filtered positive electrode material washing solution to acidify it and convert lithium carbonate or lithium hydroxide into lithium sulfate; concentrating the washing solution converted to lithium sulfate to obtain a high-concentration lithium sulfate solution; and incorporating the high-concentration lithium sulfate solution into a leachate obtained from ore.

In one embodiment, the step of incorporating the high-concentration lithium sulfate solution into the leachate obtained from ore can be performed prior to the step of purifying the leachate. In one embodiment, in the step of introducing sulfuric acid into the filtered alkaline washing solution to acidify it and convert lithium carbonate or lithium hydroxide into lithium sulfate, the acidification can control the pH to 6 or less.

In one embodiment, in the step of concentrating the washing solution converted to lithium sulfate to obtain a high-concentration lithium sulfate solution, the concentrated washing solution can satisfy formula 1.

<FORMULA 1> [Li]/([Na]+[K]+[S]) ≤ 0.50

(wherein, in formula 1, [Li], [Na], [K], and [S] respectively represent the content [g/L] of Li, Na, K, and S in the washing solution).

In one embodiment, in the step of concentrating the washing solution converted to lithium sulfate to obtain a high-concentration lithium sulfate solution, the mass of the washing solution can be concentrated to 1/2 or less. In one embodiment, in the step of concentrating the washing solution converted to lithium sulfate to obtain a high-concentration lithium sulfate solution, the mass of the washing solution can be concentrated to a range of 1/2 to 1/8.

In one embodiment, in the step of concentrating the washing solution converted to lithium sulfate to obtain a high-concentration lithium sulfate solution, the proportion of solids can be controlled to 1.0% or less by weight. In one embodiment, the solid may be Li₂CO₃ precipitate.

In one embodiment, in the step of introducing sulfuric acid into the filtered alkaline washing solution to acidify it and convert lithium carbonate or lithium hydroxide into lithium sulfate, carbon dioxide may be removed. In one embodiment, the high-concentration lithium sulfate solution obtained from the step of concentrating the washing solution converted to lithium sulfate may have a carbon content reduced by 50% or more compared to the alkaline washing solution.

In one embodiment, in the step of introducing sulfuric acid into the filtered positive electrode material washing solution to acidify it and convert lithium carbonate or lithium hydroxide into lithium sulfate, the sulfuric acid may be added in an amount of 10 to 15 parts by weight based on 100 parts by weight of the positive electrode material washing solution. In one embodiment, it may be a method for recovering lithium components from a positive electrode material washing solution containing metals and sulfates including lithium and nickel during the manufacturing process of a positive electrode active material.

### ADVANTAGEOUS EFFECTS

According to one embodiment of the present invention, the washing solution for lithium recovery satisfies a lithium content of 0.5 or less relative to sodium, potassium, and sulfur, thereby providing a concentrated washing solution capable of recovering high-concentration lithium without precipitate formation.

According to another embodiment of the present invention, the method for recovering lithium from a lithium-containing waste solution provides a method for recovering lithium from a lithium-containing waste solution that maximizes the concentration of lithium during evaporation concentration by lowering the pH through the addition of an acid solution to the washing solution, thereby preventing precipitate formation.

### BRIEF DESCRIPTION OF THE DRAWINGS

FIG. 1 is a flowchart illustrating a method for recovering lithium from a lithium-containing waste solution according to an embodiment of the present invention.
FIG. 2 is a schematic representation of a method for recovering lithium from a lithium-containing waste solution according to an embodiment of the present invention.
FIG. 3 is a graph showing the proportion of solids according to the concentration ratio in an embodiment of the present invention.

### DETAILED DESCRIPTION OF THE EMBODIMENTS

The terms first, second, and third, etc., are used to describe various elements, components, regions, layers, and/or sections, but are not limited thereto. These terms are used only to distinguish one element, component, region, layer, or section from another. Therefore, a first element, component, region, layer, or section discussed below could be referred to as a second element, component, region, layer, or section without departing from the scope of the present invention.

Technical terms used herein are merely intended to refer to specific embodiments and are not intended to limit the present invention. The singular forms used herein include plural forms as long as the context clearly dictates otherwise. The meaning of "comprising/containing/including/having" as used in the specification specifies the presence of stated features, regions, integers, steps, operations, elements, and/or components, but does not preclude the presence or addition of one or more other features, regions, integers, steps, operations, elements, components, and/or groups thereof.

When a part is referred to as being "on" or "above" another part, it can be directly on or above the other part, or intervening parts may also be present. In contrast, if a part is described as being "directly on" another part, there are no intervening parts.

Unless otherwise defined, all terms used herein, including technical and scientific terms, have the same meaning as commonly understood by one of ordinary skill in the art to which this invention belongs. Commonly used dictionary definitions are interpreted as having meanings consistent with their use in the relevant technical literature and the present disclosure, and should not be interpreted in an idealized or overly formal sense unless expressly defined herein. Additionally, unless otherwise stated, percentages are by weight, and 1 ppm is 0.0001% by weight.

Hereinafter, embodiments of the present invention will be described in detail so that those skilled in the art can easily implement them. However, the present invention may be embodied in many different forms and should not be construed as limited to the embodiments set forth herein.

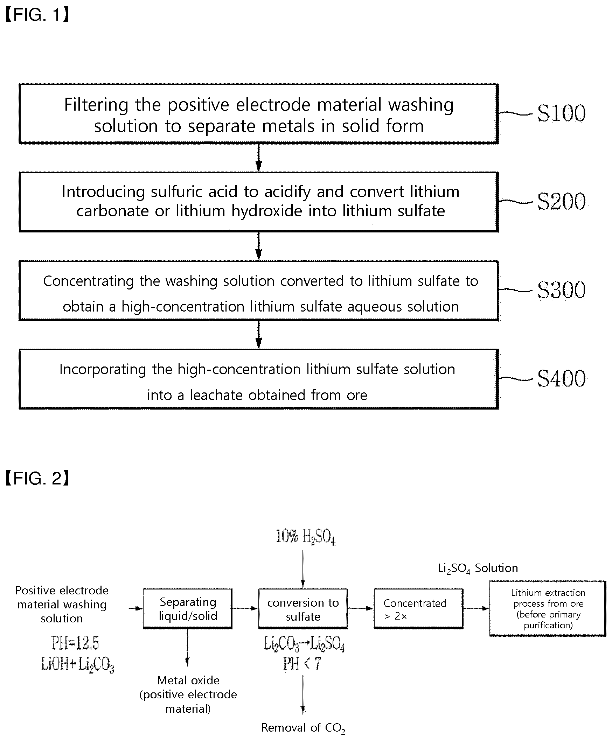

FIG. 1 is a flowchart of a method for recovering lithium from a lithium-containing waste solution according to an embodiment of the present invention.

Referring to FIG. 1, the method for recovering lithium from a lithium-containing waste solution according to an embodiment of the present invention involves recovering lithium components from a positive electrode material washing solution, which contains metals and sulfates including lithium and nickel during the manufacturing process of a positive electrode active material. The method comprises: filtering the positive electrode material washing solution to separate metals in solid form contained in the waste solution of the positive electrode (S100); introducing sulfuric acid into the filtered positive electrode material washing solution to acidify it and convert lithium carbonate or lithium hydroxide into lithium sulfate (S200); concentrating the washing solution converted to lithium sulfate to obtain a high-concentration lithium sulfate solution (S300); and incorporating the high-concentration lithium sulfate solution into a leachate obtained from ore (S400).

In step S100, filtering the positive electrode material washing solution to separate metals in solid form contained in the waste solution of the positive electrode, the waste solution may be a waste solution generated during the manufacturing process of the positive electrode active material. Specifically, the waste solution refers to a filtered solution obtained by stirring lithium transition metal oxide in a washing solution to reduce byproducts such as lithium byproducts present on its surface after manufacturing the lithium transition metal oxide. More specifically, the waste solution may be a solution containing lithium along with impurities such as nickel or sulfates, or metals such as nickel, cobalt, or manganese.

In one embodiment, the positive electrode material washing solution may be a basic solution. Specifically, the positive electrode material washing solution may be a basic solution with a pH of 7 to 15, more specifically 10 to 15. This basicity may result from the addition of NaOH or NH₄OH aqueous solution during the coprecipitation reaction in the positive electrode material manufacturing process.

In one embodiment, the positive electrode material washing solution may contain lithium hydroxide or lithium carbonate. Specifically, the lithium hydroxide or lithium carbonate may contain lithium in the range of several hundred ppm to several thousand ppm.

Step S100, filtering the positive electrode material washing solution to separate metals in solid form contained in the waste solution of the positive electrode, may involve separating solids such as metal oxides from the positive electrode material through a filtration process. Specifically, it may involve removing metal oxides, which are impurities contained in the waste solution in solid form. In one embodiment, the metal in solid form may be an oxide containing at least one of nickel, cobalt, and manganese.

In one embodiment, the filtration process for separating the metal in solid form may be performed by vacuum filtration using a filter paper, where the filter paper has a pore size smaller than the average particle size (D50) of the metal in solid form. Specifically, the filter paper may have pores of 1 to 5 µm, more specifically 1 to 3 µm. In this way, metal oxides in the waste solution can be filtered through the filter paper, while other components pass through, allowing the separation of solid and liquid phases.

Step S200, introducing sulfuric acid into the filtered positive electrode material washing solution to acidify it and convert lithium carbonate or lithium hydroxide into lithium sulfate, involves acidifying the basic positive electrode material washing solution by introducing sulfuric acid into the basic washing solution. Specifically, acidifying the positive electrode material washing solution may result in the conversion of lithium carbonate and lithium hydroxide included in the waste solution into lithium sulfate through reactions such as the following Reaction Formulas 1 and 2:

[Reaction Formula 1] Li₂CO₃ + H₂SO₄ → Li₂SO₄ + CO₂ + H₂O

[Reaction Formula 2] 2LiOH + H₂SO₄ → Li₂SO₄ + 2H₂O

In one embodiment, step S200, introducing sulfuric acid into the filtered positive electrode material washing solution to acidify it and convert lithium carbonate or lithium hydroxide into lithium sulfate, may include a step of removing carbon dioxide. From Reaction Formula 1, carbon dioxide (CO₂) is released as a separate gas, and the released carbon dioxide can reduce the carbon content in the positive electrode material washing solution.

In one embodiment, in step S200, introducing sulfuric acid into the filtered basic washing solution to acidify it and convert lithium carbonate or lithium hydroxide into lithium sulfate, the acidification may control the pH to 6 or less. Specifically, the acidification may control the pH to 5 or less. If the pH is higher than the aforementioned range, there is a problem of lithium carbonate precipitating during concentration.

In one embodiment, in step S200, introducing sulfuric acid into the filtered positive electrode material washing solution to acidify it and convert lithium carbonate or lithium hydroxide into lithium sulfate, the sulfuric acid may be added in an amount of 10 to 15 parts by weight based on 100 parts by weight of the positive electrode material washing solution. Specifically, the sulfuric acid may be added in an amount of 12.0 to 14.5 parts by weight, more specifically 12.9 to 14.1 parts by weight, based on 100 parts by weight of the positive electrode material washing solution.

If the content of sulfuric acid exceeds the upper limit of the aforementioned range, there is a problem of increased sulfur (S) removal load during the washing solution recycling purification process. If the content of sulfuric acid is below the lower limit of the aforementioned range, there is a problem of forming precipitates during concentration.

Step S300, concentrating the washing solution converted to lithium sulfate to obtain a high-concentration lithium sulfate solution, involves evaporating the washing solution using an evaporator to obtain a high-concentration lithium sulfate solution. Specifically, the step of obtaining a high-concentration lithium sulfate solution involves evaporating the washing solution to reduce the mass of the aqueous solution, thus confirming the concentration factor. For example, when the mass of the aqueous solution is reduced to 1/2, 1/4, 1/5, 1/8, or 1/10, the concentration factor of the aqueous solution may be 2-fold, 4-fold, 5-fold, 8-fold, or 10-fold, respectively.

In one embodiment, step S300, concentrating the washing solution converted to lithium sulfate to obtain a high-concentration lithium sulfate solution, may concentrate the mass of the washing solution to 1/2 or less. Specifically, the mass of the washing solution may be concentrated to a range of 1/2 to 1/8.

If the concentration exceeds the upper limit of the range, the proportion of solids becomes excessive, leading to the excessive formation of precipitates. If the concentration is below the lower limit of the range, the yield of lithium is low.

In one embodiment, step S300, concentrating the washing solution converted to lithium sulfate to obtain a high-concentration lithium sulfate solution, may control the proportion of solids to 1.0% or less by weight. The solid may be Li₂CO₃ precipitate. Specifically, the proportion of solids may be controlled to 0.56% or less, more specifically 0.26% or less, and even more specifically 0.16% or less.

If the proportion of solids exceeds the aforementioned range, precipitates adhere to the equipment, acting as an obstacle to the stable operation of the equipment, and lithium loss occurs when removing the adhered precipitates.

In one embodiment, step S300, concentrating the washing solution converted to lithium sulfate to obtain a high-concentration lithium sulfate solution, may be performed in a temperature range of 50 to 90 °C. Specifically, the temperature range may be 50 to 80 °C, more specifically 60 to 80 °C. In one embodiment, the step of concentrating the washing solution converted to lithium sulfate to obtain a high-concentration lithium sulfate solution may be performed at an absolute pressure of 100 to 300 mbar, specifically 150 to 250 mbar.

If the temperature range exceeds the upper limit, there is a problem of carry-over. Specifically, as the temperature becomes excessively high, the pressure becomes excessively high, resulting in not only the removal of water but also the extraction of lithium-containing solution, which lowers the lithium recovery rate. If the temperature range is below the lower limit, there is a problem that evaporation concentration does not occur.

In one embodiment, in step S300, concentrating the washing solution converted to lithium sulfate to obtain a high-concentration lithium sulfate solution, the concentrated washing solution may satisfy the following formula 1:

<FORMULA 1> [Li]/([Na]+[K]+[S]) ≤ 0.50

(Wherein, in formula 1, [Li], [Na], [K], and [S] respectively represent the content [g/L] of Li, Na, K, and S in the washing solution)

Formula 1 is a relational expression for the content of lithium relative to the total content of impurities Na, K, and S in the washing solution converted to lithium sulfate. Formula 1 may be 0.50 or less, specifically 0.40 to 0.50 or less. By satisfying the value of Formula 1, lithium does not precipitate during concentration, allowing for the acquisition of a concentrated washing solution with high lithium content and increasing the lithium recovery rate from the waste solution.

If the value of Formula 1 exceeds the upper limit, there is a problem of lithium precipitation during concentration. If the value of Formula 1 is below the lower limit, there is a problem of excessively high impurity content.

Step S400, incorporating the high-concentration lithium sulfate solution into a leachate obtained from ore, involves introducing the high-concentration lithium sulfate solution between the leaching process and a primary purification process of a typical ore lithium recovery process. Specifically, the ore lithium recovery process may proceed in the order of a roasting process that facilitates the reaction of the concentrate or ore with sulfuric acid by heating lithium concentrate or ore at high temperatures, a roasting process that converts lithium ions into lithium sulfate by reacting the roasted concentrate and ore with sulfuric acid, and a leaching process that dissolve lithium sulfate in water and purification process. By mixing the high-concentration lithium sulfate solution into the leaching and purification processes mentioned above, it forms a lithium sulfate solution as in existing processes, allowing the recycling of lithium present in the washing solution without the need for additional equipment, making it economical and environmentally friendly.

In one embodiment, step S400, incorporating the high-concentration lithium sulfate solution into a leachate obtained from ore, may be performed prior to the step of purifying the leachate. The concentrated lithium sulfate solution prepared from the positive electrode material washing solution is introduced between the leaching process and the purification step, mixed with the lithium sulfate solution of the leaching process, and goes through the existing ore lithium process, offering the advantage of recycling lithium present in the washing solution.

The washing solution for lithium recovery according to another embodiment of the present invention refers to the concentrated washing solution prepared in the step of obtaining a high-concentration lithium sulfate by concentrating the washing solution converted to lithium sulfate in the aforementioned method of recovering lithium. The washing solution for lithium recovery may satisfy the following formula 1:

<FORMULA 1> [Li]/([Na]+[K]+[S]) ≤ 0.50

(Wherein, in formula 1, [Li], [Na], [K], and [S] respectively represent the content [g/L] of Li, Na, K, and S in the washing solution)

The detailed description of Formula 1 is as described above in FIG. 1.

Hereinafter, specific examples of the present invention will be described. However, the following examples are merely specific embodiments of the present invention and are not intended to limit the present invention to these examples.

FIG. 2 is a schematic illustration of a method for recovering lithium from a lithium-containing waste solution according to an embodiment of the present invention.

Referring to FIG. 2, the concentrated lithium sulfate solution prepared in the manner of Experimental Examples 1 to 3 can be introduced before the primary purification of the ore Li extraction process.

### Experimental Example 1 - Example 1

A mixed solution corresponding to pH 6 was prepared by introducing 0.74 kg of 10% dilute sulfuric acid into 5.7 kg of washing solution, and the solution was evaporated at 70 °C and an absolute pressure of 200 mbar using an evaporative concentrator. Specifically, when concentrated 2-fold, 4-fold, 5-fold, 8-fold, and 10-fold (mass reduced to 1/2, 1/4, 1/5, 1/8, and 1/10), the mass of the solution and the precipitated solid, and the concentrations of Li, Na, K, S, and C in the solution are as shown in Table 1 below.

At this time, the pH of the washing solution is 12.7, and C exists in the solution in the form of HCO₃⁻ or CO₃²⁻, and the washing solution satisfies Li: 4.4 g/L, S: 4.4 g/L, P: 0.009 g/L, K: 0.005 g/L, Na: 0.30 g/L, and C: 1.06 g/L.

**(Table 1)**

| Category | 0× Concentration | 2× Concentration | 4× Concentration | 8× Concentration | 10× Concentration |
|---|---|---|---|---|---|
| Liquid phase (kg) | 6.44 | 3.22 | 1.39 | 0.68 | 0.53 |
| Solid phase (kg) | 0 | 0.0010 | 0.0042 | 0.0045 | 0.0062 |
| Solid content (wt%) | 0 | 0.03 | 0.26 | 0.56 | 9.63 |
| Li(g/L) | 3.90 | 7.79 | 16.08 | 35.73 | 36.36 |
| Na(g/L) | 0.27 | 0.54 | 1.13 | 2.52 | 3.49 |
| K(g/L) | 0.0044 | 0.0089 | 0.019 | 0.042 | 0.058 |
| S(g/L) | 8.88 | 17.9 | 37.82 | 84.29 | 86.42 |
| C(g/L) | 0.57 | 0.26 | 0.064 | 0.0099 | 0.0094 |
| Li/(Na+K+S) | 0.426 | 0.422 | 0.413 | 0.411 | 0.404 |

Examining Table 1 reveals that the pH of the washing solution decreases from 12.7 to 6, and the concentration of carbon (C) is reduced by approximately 50%, which allows for a reduction in the precipitation amount of Li₂CO₃ during concentration. Furthermore, during an 8-fold concentration, the precipitation amount of solids can be controlled to less than 1% of the total weight. The majority of the solid precipitate is Li₂CO₃.

### Experimental Example 2 - Example 2

A mixed solution with a pH of 5 was prepared by adding 0.74 kg of 10% diluted sulfuric acid to 5.7 kg of washing solution, and the solution was evaporated using an evaporative concentrator at 70°C and an absolute pressure of 200 mbar. Specifically, when concentrated 2-fold, 4-fold, 5-fold, 8-fold, and 10-fold (reducing the mass to 1/2, 1/4, 1/5, 1/8, and 1/10, respectively), the mass of the solution and the precipitated solids, as well as the concentrations of Li, Na, K, S, and C in the solution, are as shown in Table 2 below.

**(Table 2)**

| Category | 0× Concentration | 2× Concentration | 4× Concentration | 8× Concentration | 10× Concentration |
|---|---|---|---|---|---|
| Liquid phase (kg) | 6.49 | 3.25 | 1.62 | 0.81 | 0.59 |
| Solid phase (kg) | 0 | 0.00016 | 0.00019 | 0.0013 | 0.064 |
| Solid content (wt%) | 0 | 0.005 | 0.01 | 0.16 | 9.86 |
| Li(g/L) | 3.87 | 3.87 | 16.44 | 36.41 | 36.36 |
| Na(g/L) | 0.26 | 0.26 | 1.12 | 2.50 | 3.50 |
| K(g/L) | 0.0044 | 0.0044 | 0.019 | 0.042 | 0.058 |
| S(g/L) | 9.09 | 9.09 | 38.68 | 85.84 | 86.41 |
| C(g/L) | 0.36 | 0.36 | 0.052 | 0.0099 | 0.0098 |
| Li/(Na+K+S) | 0.414 | 0.414 | 0.413 | 0.412 | 0.404 |

In examining Table 2, it is observed that when the pH was lowered to 5, the concentration of C decreased by approximately 70%. Specifically, when the pH was lowered to 5, the solid precipitation ratio decreased to 0.16 wt% upon 8-fold concentration.

### Experimental Example 3 - Example 3

A mixed solution corresponding to pH 4 was prepared by adding 0.80 kg of 10% diluted sulfuric acid to 5.7 kg of the washing solution, and the solution was evaporated at 70°C and an absolute pressure of 200 mbar using an evaporative concentrator. Specifically, when concentrated 2-fold, 4-fold, 5-fold, 8-fold, and 10-fold (resulting in mass reductions to 1/2, 1/4, 1/5, 1/8, and 1/10, respectively), the mass of the solution and the precipitated solid, as well as the concentrations of Li, Na, K, S, and C in the solution, are as shown in Table 3 below.

**(Table 3)**

| Category | 0× Concentration | 2× Concentration | 4× Concentration | 8× Concentration | 10× Concentration |
|---|---|---|---|---|---|
| Liquid phase (kg) | 6.50 | 3.25 | 1.39 | 0.81 | 0.59 |
| Solid phase (kg) | 0 | 0 | 0 | 0.0014 | 0.064 |
| Solid content (wt%) | 0 | 0 | 0 | 0.17 | 9.85 |
| Li(g/L) | 3.87 | 7.78 | 16.45 | 36.41 | 36.37 |
| Na(g/L) | 0.26 | 0.53 | 1.12 | 2.5 | 3.47 |
| K(g/L) | 0.0044 | 0.0088 | 0.019 | 0.042 | 0.058 |
| S(g/L) | 9.12 | 18.36 | 38.79 | 85.90 | 86.48 |
| C(g/L) | 0.34 | <0.001 | <0.001 | <0.001 | <0.001 |
| Li/(Na+K+S) | 0.412 | 0.412 | 0.412 | 0.412 | 0.404 |

Upon reviewing Table 3, when the pH was lowered to 4, the concentration of carbon (C) decreased by approximately 70%. When the pH was lowered to 4, the solid precipitation ratio decreased to 0.17 wt% upon 8-fold concentration.

### Experimental Example 4 - Comparative Example

5.7 kg of the washing solution was evaporated using an evaporative concentrator at 70°C and an absolute pressure of 200 mbar. When concentrated 2-fold, 4-fold, 5-fold, 8-fold, and 10-fold (with the mass reduced to 1/2, 1/4, 1/8, 1/10), the mass of the solution and the precipitated solid, as well as the concentrations of Li, Na, K, S, and C in the solution, are as shown in Table 4 below.

**(Table 4)**

| Category | 0× Concentration | 2× Concentration | 4× Concentration | 8× Concentration | 10× Concentration |
|---|---|---|---|---|---|
| Liquid phase (kg) | 5.7 | 2.82 | 1.39 | 0.68 | 0.53 |
| Solid phase (kg) | 0 | 0.033 | 0.035 | 0.036 | 0.036 |
| Solid content (wt%) | 0 | 1.16 | 2.53 | 5.06 | 6.33 |
| Li(g/L) | 4.4 | 6.59 | 13.55 | 30.07 | 39.6 |
| Na(g/L) | 0.3 | 0.6 | 1.28 | 2.84 | 3.75 |
| K(g/L) | 0.005 | 0.01 | 0.021 | 0.047 | 0.062 |
| S(g/L) | 5.67 | 11.43 | 24.15 | 53.81 | 70.89 |
| C(g/L) | 1.06 | 0.18 | 0.057 | 0.025 | 0.021 |
| Li/(Na+K+S) | 0.736 | 0.547 | 0.532 | 0.530 | 0.530 |

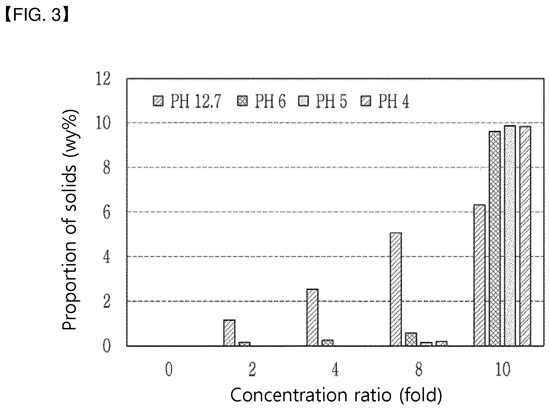

Referring to Table 4, it was confirmed that even when concentrated 2-fold, Li₂CO₃ precipitate occurs at 1 wt% or more of the total weight. FIG. 3 is a graph showing the proportion of solids according to the concentration ratio in one embodiment of the present invention.

Referring to FIG. 3, it was confirmed that the formation ratio of solid lithium carbonate according to the concentration ratio can be formed within 1 wt%. Specifically, when the pH is lowered to 6 or less, it was confirmed that the formation ratio of solid lithium carbonate is within 1 wt%, allowing an eight-fold concentration of the washing solution.

The present invention is not limited to the embodiments and/or examples described above, but can be manufactured in various different forms, and those skilled in the art to which the present invention pertains will understand that it can be implemented in other specific forms without changing the technical spirit or essential features of the present invention. Therefore, it should be understood that the embodiments and/or examples described above are illustrative in all respects and not restrictive.

## Claims

1. A method for recovering lithium from a lithium-containing waste solution, comprising:
filtering a positive electrode material washing solution to separate metals in solid form contained in an alkaline waste solution;
introducing sulfuric acid into the filtered positive electrode material washing solution to acidify it and convert lithium carbonate or lithium hydroxide into lithium sulfate;
concentrating the washing solution converted to lithium sulfate to obtain a high-concentration lithium sulfate solution; and
incorporating the high-concentration lithium sulfate solution into a leachate obtained from ore.

2. The method for recovering lithium from a lithium-containing waste solution of claim 1,
wherein the step of incorporating the high-concentration lithium sulfate solution into the leachate obtained from ore is performed prior to the step of purifying the leachate.

3. The method for recovering lithium from a lithium-containing waste solution of claim 1,
wherein in the step of introducing sulfuric acid into the filtered alkaline washing solution to acidify it and convert lithium carbonate or lithium hydroxide into lithium sulfate, the acidification controls the pH to 6 or less.

4. The method for recovering lithium from a lithium-containing waste solution of claim 1,
wherein in the step of concentrating the washing solution converted to lithium sulfate to obtain a high-concentration lithium sulfate solution, the concentrated washing solution satisfies the following formula 1:
<FORMULA 1> [Li]/([Na]+[K]+[S]) ≤ 0.50
(wherein, in the formula 1, [Li], [Na], [K], and [S] respectively represent the content [g/L] of Li, Na, K, and S in the washing solution).

5. The method for recovering lithium from a lithium-containing waste solution of claim 1,
wherein in the step of concentrating the washing solution converted to lithium sulfate to obtain a high-concentration lithium sulfate solution, the mass of the washing solution is concentrated to 1/2 or less.

6. The method for recovering lithium from a lithium-containing waste solution of claim 1,
wherein in the step of concentrating the washing solution converted to lithium sulfate to obtain a high-concentration lithium sulfate solution, the mass of the washing solution is concentrated to a range of 1/2 to 1/8.

7. The method for recovering lithium from a lithium-containing waste solution of claim 1,
wherein in the step of concentrating the washing solution converted to lithium sulfate to obtain a high-concentration lithium sulfate solution, the proportion of solids is controlled to 1.0% or less by weight.

8. The method for recovering lithium from a lithium-containing waste solution of claim 7, wherein the solid is Li₂CO₃ precipitate.

9. The method for recovering lithium from a lithium-containing waste solution of claim 1,
wherein in the step of introducing sulfuric acid into the filtered alkaline washing solution to acidify it and convert lithium carbonate or lithium hydroxide into lithium sulfate, carbon dioxide is removed.

10. The method for recovering lithium from a lithium-containing waste solution of claim 1,
wherein the high-concentration lithium sulfate solution obtained from the step of concentrating the washing solution converted to lithium sulfate has a carbon content reduced by 50% or more compared to the alkaline washing solution.

11. The method for recovering lithium from a lithium-containing waste solution of claim 1,
wherein in the step of introducing sulfuric acid into the filtered positive electrode material washing solution to acidify it and convert lithium carbonate or lithium hydroxide into lithium sulfate, the sulfuric acid is added in an amount of 10 to 15 parts by weight based on 100 parts by weight of the positive electrode material washing solution.

12. The method for recovering lithium from a lithium-containing waste solution of claim 1,
wherein it is a method for recovering lithium components from a positive electrode material washing solution containing metals and sulfates including lithium and nickel during the manufacturing process of a positive electrode active material.

13. A washing solution prepared from a lithium-containing waste solution, satisfying the following formula 1 for lithium recovery:
<FORMULA 1> [Li]/([Na]+[K]+[S]) ≤ 0.50
(wherein, in the formula 1, [Li], [Na], [K], and [S] respectively represent the content [g/L] of Li, Na, K, and S in the washing solution).
